# EUROPÄISCHE PATENTSCHRIFT

(11) **EP 2 165 673 B1**
(45) Veröffentlichungstag und Bekanntmachung des Hinweises auf die Patenterteilung: **31.10.2018**
(21) Anmeldenummer: 09170554.1
(22) Anmeldetag: 17.09.2009
(51) Int. Cl.: A61C 17/20

(54) **Zahnärztliches Ultraschallinstrument**
Dental ultrasound instrument
Instrument dentaire à ultrasons

(30) Priorität: 17.09.2008 DE 102008042175
(43) Veröffentlichungstag der Anmeldung: 24.03.2010
(73) Patentinhaber: Sirona Dental Systems GmbH, 64625 Bensheim (DE)
(72) Erfinder: Rein, Matthias, 64653, Lorsch (DE)
(74) Vertreter: Sommer, Peter

(56) Entgegenhaltungen:
- DE-A1- 10 039 198
- JP-A- 2002 369 828
- US-A- 4 315 742
- US-A- 4 484 893

## Beschreibung

### Technisches Gebiet

Die Erfindung betrifft ein zahnärztliches Ultraschallinstrument aufweisend ein Gehäuse mit einer Mittelachse und einem Hohlraum mit einer stirnseitig am Gehäuse vorgesehenen Öffnung sowie ein Ultraschallwerkzeug mit einem Antriebsschaft und einer Ultraschallspitze, wobei das Ultraschallwerkzeug zumindest teilweise in dem Hohlraum angeordnet ist.

### Stand der Technik

Aus der DE 100 39 198 A1 ist ein dentalmedizinisches Behandlungsinstrument mit einem stabförmigen Handstück, mit dessen vorderen Endbereich ein Werkzeug durch eine Werkzeugkupplung lösbar gekuppelt ist, bekannt. Das Handstück weist eine Griffhülse auf, die einen Mantelkörper des Handstücks bildet, sowie einen Schwingstab, der sich längs in der Griffhülse erstreckt und darin radial oder auch axial elastisch nachgiebig gelagert ist. Die Griffhülse ist im Bereich der Werkzeugkupplung längs geteilt, so dass ein hinterer Griffhülsenteil und ein vorderer kappenförmiger, verlängerter Griffhülsenteil vorgesehen sind, die durch eine lösbare Kupplung miteinander verbunden sind. Der vordere Griffhülsenteil umgibt den Werkzeugschaft mit radialem Abstand und erstreckt sich bis in den Übergangsbereich des sichelförmigen Werkzeugabschnitts. Der Schwingstab ist in seinem vorderen Endbereich in einem im vorderen Endbereich des hinteren Griffhülsenteils eingesetzten Lagerring aus elastisch kombinierbarem und vorzugsweise auch schallabsorbierendem Material wie Gummi oder Kunststoff elastisch nachgiebig konzentriert gelagert. Der Lagerring kann auch aus unelastischem Material, z. B. aus Stahl oder einer Stahllegierung, bestehen, wenn darin ein innerer Lagerring aus elastischem nachgiebigem Material, z. B. ein O-Ring, angeordnet ist, in dem der Schwingungsschaft elastisch nachgiebig gelagert ist.

Weitere zahnärztliche Ultraschallinstrumente sind aus der DE 100 39 198 A1, der JP 2002-369828 A, der US 4,315,742 A und der US 4,484,893 A bekannt.

Die Aufgabe der Erfindung besteht darin, ein zahnärztliches Ultraschallinstrument derart auszubilden und anzuordnen, dass bei der Vorsehung von Dichtelementen ein optimaler Betrieb unter Ausnutzung der vollen Leistung gewährleistet ist.

### Darstellung der Erfindung

Die Erfindung betrifft ein zahnärztliches Ultraschallinstrument nach Anspruch 1.

Hierdurch wird erreicht, dass trotz der an dem Ultraschallwerkzeug vorgesehenen Dichtung die volle Bewegungsfreiheit des Ultraschallwerkzeuges gewährleistet ist, ohne dass eine Beeinflussung durch eine an dem Ultraschallwerkzeug und dem Gehäuse anliegende Dichtung vorhanden wäre. Ein unmittelbares Eindringen von Spraynebel und/oder Substrat, welche an dem Schaft des Ultraschallwerkzeuges ablaufen, in die Öffnung des Hohlraums wird verhindert. Das Substrat wird über das an dem Ultraschallwerkzeug anliegende Dichtungselement aufgehalten bzw. tropft am Dichtungselement selbst ab, ohne dabei in die Öffnung einzutreten. Beim Sterilisieren bzw. Autoklavieren des Ultraschallinstruments wird das Eindringen des Dampfes durch den erfindungsgemäßen Abstand Sr gewährleistet. Zudem ist der Ablauf des durch das Autoklavieren entstehenden Kondensats aus dem Hohlraum gewährleistet, vor allem wenn die Spitze entfernt wird.

Ein zweites Dichtungselement liegt dichtend gegen das Gehäuse an, wobei zwischen dem ersten Dichtungselement und dem zweiten Dichtungselement ein radialer Abstand Sr vorhanden ist. Durch den Einsatz eines zweiten gehäuseseitigen Dichtungselements kann unabhängig von einer etwaigen Gehäuseform der vorzusehende Abstand Sr zwischen beiden Dichtungselementen individuell gestaltet werden, ohne dass das Gehäuse konstruktiv angepasst werden müsste.

Das erste Dichtungselement und das zweite Dichtungselement sind in radialer Richtung zur Mittelachse hintereinander angeordnet. Durch das Hintereinanderanordnen der beiden Dichtungselemente kann ein unmittelbares Eindringen von Substrat in die Öffnung bzw. in den Hohlraum verhindert werden, da kein direkter Zugang zum Hohlraum vorhanden ist.

Das zweite Dichtungselement weist einen Steg und das erste Dichtungselement einen eine Nut bildenden Doppelsteg auf. Durch diese geometrische Ausbildung der beiden Dichtungselemente kann eine ausreichende Dichtheit bei Gewährleistung des erforderlichen Abstands Sr bzw. Spiels S gewährleistet werden.

Das zweite Dichtungselement kann ein Teil des Gehäuses sein. Soweit Teile des Gehäuses als Dichtungselement bzw. als Lager für Dichtungselemente verwendet werden, wäre es nur notwendig, das erste Dichtungselement mit Rücksicht auf das gewünschte Spiel auszubilden. Zwischen dem ersten Dichtungselement und dem als Gehäuse ausgebildeten zweiten Dichtungselement kann zumindest eine Anlage vorgesehen sein, die zumindest den erfindungsgemäßen Abstand Sr und damit das erforderliche Spiel aufweisen.

Ferner kann es von Vorteil sein, wenn die Ultraschallspitze an einer Trennstelle lösbar an dem Antriebsschaft angeordnet ist, wobei das erste Dichtungselement lösbar an dem Ultraschallwerkzeug oder das zweite Dichtungselement lösbar an dem Gehäuse angeordnet ist und das erste Dichtungselement lösbar an der Ultraschallspitze angeordnet ist. Durch das Lösen der Ultraschallspitze von dem Antriebsschaft kann bei gleichzeitigem Lösen des Dichtungselementes die Öffnung freigegeben werden. Somit kann beim Autoklavieren ausreichend Dampf in die Öffnung eintreten und anschließend das sich darin gebildete Kondensat ungehindert abfließen. Ob das Dichtungselement dabei auf der Ultraschallspitze verbleibt, also lösbar am Gehäuse angeordnet ist, oder am Gehäuse verbleibt, d. h. lösbar an der Spitze angeordnet ist, kann frei gewählt werden.

Zudem kann es von Vorteil sein, wenn das Gehäuse eine ein- oder mehrteilige Gehäusewand aufweist, gegen die das zweite Dichtungselement anliegt oder die das zweite Dichtungselement zumindest teilweise bildet. Bei einer mehrteiligen Gehäusewand können Teile der Gehäusewand zwecks Handhabung der Dichtungselemente separat konstruiert bzw. montiert werden.

Daneben kann es vorteilhaft sein, wenn die Gehäusewand aus einer Außenhülse und einer Innenhülse gebildet ist, wobei das zweite Dichtungselement gegen die Innenhülse anliegt oder die Innenhülse das zweite Dichtungselement zumindest teilweise bildet, und zwischen der Außenhülse und der Innenhülse ein Lichtleiter mit einem Lichtaustritt vorgesehen ist, wobei der Lichtaustritt im Bereich der Öffnung angeordnet ist. Dadurch, dass das Dichtungselement vorzugsweise an der Innenhülse angeordnet sein kann, ist der Lichtaustritt nicht durch das Dichtungselement behindert. Vorzugsweise kann die Innenhülse eine umlaufende Nut aufweisen, die zur Aufnahme bzw. Anlage des Dichtungselementes dienen kann, so dass im Bereich des Lichtaustritts mehr Freiraum geschaffen werden kann.

### Kurze Beschreibung der Zeichnung

In den Zeichnungen sind Ausführungsbeispiele der Erfindung dargestellt. Es zeigt die:
- Fig. 1: ein zahnärztliches Ultraschallinstrument;
- Fig. 2: eine Schnittdarstellung des vorderen Teils eines nicht erfindungsgemäßen Ultraschallinstruments;
- Fig. 3: ein erfindungsgemäßes Dichtungselement mit Abstand.

### Ausführungsbeispiele

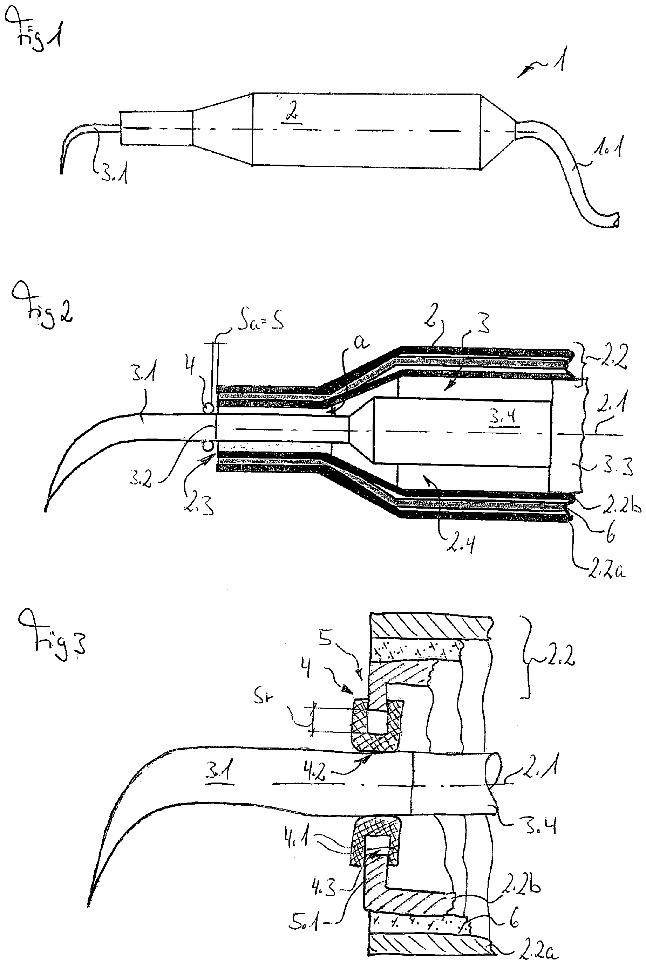

Ein in Fig. 1 dargestelltes zahnärztliches Ultraschallinstrument 1 weist ein Gehäuse 2 für ein Ultraschallwerkzeug 3 mit einer Ultraschallspitze 3.1 auf. Das Ultraschallinstrument 1 ist über eine Anschlussleitung 1.1 mit einem nicht dargestellten Versorgungsteil verbindbar.

In einer nicht erfindungsgemäßen Ausführung nach Fig. 2 ist das Gehäuse 2 aus einer mehrteiligen Gehäusewand 2.2 gebildet, die einen Hohlraum 2.4 einschließt. Innerhalb des Hohlraums 2.4 ist das Ultraschallwerkzeug 3 koaxial zu einer Mittelachse 2.1 angeordnet. Das Ultraschallwerkzeug 3 wird über eine Ansteuerelektronik 3.3, die ebenfalls in dem Gehäuse 2 angeordnet ist, angesteuert. Das Ultraschallwerkzeug 3 umfasst einen Antriebsschaft 3.4, an dem über eine Trennstelle 3.2 die Ultraschallspitze 3.1 befestigt ist. Der Antriebsschaft 3.4 ist innerhalb des Hohlraums 2.4 mit Abstand a zur Gehäusewand 2.2 angeordnet und tritt stirnseitig im Bereich einer Öffnung 2.3 aus dem Gehäuse 2 aus.

Unmittelbar im Bereich des Austritts ist die Trennstelle 3.2 vorgesehen, an der sich die Ultraschallspitze 3.1 an den Antriebsschaft 3.4 anschließt. Im Bereich der Öffnung 2.3 ist auf der Ultraschallspitze 3.1 ein erstes Dichtungselement 4 vorgesehen, das dichtend gegen die Ultraschallspitze 3.1 anliegt. Das Dichtungselement 4 ist als O-Ring ausgebildet, wobei zwischen dem Dichtungselement 4 und dem Gehäuse 2 ein axialer Abstand Sa bzw. ein einen Spalt gewährleistendes Spiel S vorgesehen ist.

Im erfindungsgemäßen Ausführungsbeispiel nach Fig. 3 ist das erste Dichtungselement 4 im Querschnitt U-förmig ausgebildet und weist einen Doppelsteg 4.1 auf und liegt mit einer geschlossenen Seite 4.2 gegen die Ultraschallspitze 3.1 dichtend an. Innerhalb einer durch den Doppelsteg 4.1 gebildeten Nut 4.3 ist ein gehäuseseitiges zweites Dichtungselement 5, welches einen Steg 5.1 aufweist, angeordnet. Zwischen dem ersten Dichtungselement 4 und dem zweiten Dichtungselement 5 ist ein in radialer Richtung zur Mittelachse 2.1 verlaufender, das Spiel S gewährleistender Abstand Sr vorgesehen. Das erste Dichtungselement 4 ist gegenüber dem Gehäuse 2.2 bzw. dem zweiten gehäuseseitigen Dichtungselement 5 in radialer Richtung gemäß dem radialen Abstand Sr verschiebbar. Der Doppelsteg 4.1 liegt dabei in axialer Richtung zur Mittelachse 2.1 dichtend an dem Steg 5.1 der Gehäusewand 2.2 an.

Im erfindungsgemäßen Ausführungsbeispiel nach Fig. 3 sind die beiden Dichtungselemente 4, 5 bzw. die Stege 4.1, 5.1 in axialer Richtung hintereinander angeordnet.

Bei der Ausführung nach Fig. 3 besteht die Gehäusewand 2.2 aus einer Außenhülse 2.2a, einer Innenhülse 2.2b und einem zwischen der Außenhülse 2.2a und der Innenhülse 2.2b angeordneten Lichtleiter bzw. einer Lichtleiterhülse 6. Das zweite Dichtungselement 5 ist dabei durch die Innenhülse 2.2b gebildet.

### Bezugszeichen

- 1: zahnärztliches Ultraschallinstrument
- 1.1: Anschlussleitung
- 2: Gehäuse
- 2.1: Mittelachse
- 2.2: Gehäusewand
- 2.2a: Außenhülse
- 2.2b: Innenhülse
- 2.3: Öffnung
- 2.4: Hohlraum
- 3: Ultraschallwerkzeug
- 3.1: Ultraschallspitze
- 3.2: Trennstelle
- 3.3: Ansteuerelektronik
- 3.4: Antriebsschaft
- 4: erstes Dichtungselement
- 4.1: Doppelsteg mit Nut
- 4.2: geschlossene Seite
- 4.3: Nut
- 5: zweites Dichtungselement
- 5.1: Steg
- 6: Lichtleiter, Lichtleiterhülse
- a: Abstand
- Sr: Abstand radial
- Sa: Abstand axial
- S: Spiel

## Patentansprüche

1. Zahnärztliches Ultraschallinstrument (1) aufweisend ein Gehäuse (2) mit einer Mittelachse (2.1) und einem Hohlraum (2.4) mit einer stirnseitig am Gehäuse (2) vorgesehenen Öffnung (2.3) sowie ein Ultraschallwerkzeug (3) mit einer Ultraschallspitze (3.1), wobei das Ultraschallwerkzeug (3) zumindest teilweise in dem Hohlraum (2.4) angeordnet ist, **dadurch gekennzeichnet, dass** ein erstes im Querschnitt U-förmig ausgebildetes Dichtungselement (4) vorhanden ist, das mit einer geschlossenen Seite (4.2) dichtend gegen die Ultraschallspitze (3.1) anliegt und das sich in radialer Ausdehnung von der Mittelachse (2.1) weg erstreckt, dass ein zweites Dichtungselement (5) vorhanden ist, das dichtend gegen das Gehäuse (2) anliegt, wobei zwischen dem ersten Dichtungselement (4) und dem zweiten Dichtungselement (5) ein radialer Abstand Sr vorhanden ist, dass das erste Dichtungselement (4) und das zweite Dichtungselement (5) in radialer Richtung zu einer Mittelachse (2.1) hintereinander angeordnet sind und dass das erste Dichtungselement (4) einen eine Nut (4.3) ausbildenden Doppelsteg (4.1) und das zweite Dichtungselement (5) einen Steg (5.1) aufweist und dass im Betriebszustand der Steg (5.1) und die Nut (4.3) ineinander greifen.

2. Zahnärztliches Ultraschallinstrument nach Anspruch 1, **dadurch gekennzeichnet, dass** die Ultraschallspitze (3.1) an einer Trennstelle (3.2) lösbar an dem Antriebsschaft (3.4) angeordnet ist, wobei das erste Dichtungselement (4) lösbar an der Ultraschallspitze (3.1) und/oder das zweite Dichtungselement (5) lösbar an dem Gehäuse (2) angeordnet ist.

3. Zahnärztliches Ultraschallinstrument nach einem der Ansprüche 1 bis 2, **dadurch gekennzeichnet, dass** das Gehäuse (2) eine ein- oder mehrteilige Gehäusewand (2.2) aufweist, gegen die das zweite Dichtungselement (5) anliegt oder die das zweite Dichtungselement (5) zumindest teilweise bildet.

4. Zahnärztliches Ultraschallinstrument nach Anspruch 3, **dadurch gekennzeichnet, dass** die Gehäusewand (2.2) aus einer Außenhülse (2.2a) und einer Innenhülse (2.2b) gebildet ist, wobei das zweite Dichtungselement (5) gegen die Innenhülse (2.2b) anliegt oder die Innenhülse (2.2b) das zweite Dichtungselement (5) zumindest teilweise bildet.

5. Zahnärztliches Ultraschallinstrument nach Anspruch 4, **dadurch gekennzeichnet, dass** zwischen der Außenhülse (2.2a) und der Innenhülse (2.2b) ein Lichtleiter (6) mit einem Lichtaustritt (6.1) vorgesehen ist, wobei der Lichtaustritt (6.1) im Bereich der Öffnung (2.3) angeordnet ist.

## Claims

1. Dental ultrasonic instrument (1) comprising a housing (2) having a central axis (2.1) and a cavity (2.4), with an opening (2.3) provided at the end face of the housing (2), as well as an ultrasonic tool (3) having an ultrasonic tip (3.1), wherein the ultrasonic tool (3) is disposed at least partially in the cavity (2.4), **characterized in that** a first sealing element (4) is present, which is u-shaped in cross-section, rests against the ultrasonic tip (3.1) with a closed side (4.2) in a sealing manner and extends radially away from the central axis (2.1), that a second sealing element (5) is present, which rests against the housing (2) in a sealing manner, wherein a radial distance Sr is present between the first sealing element (4) and the second sealing element (5), that, in radial direction to a central axis (2.1), the first sealing element (4) and the second sealing element (5) are arranged one behind the other, that the first sealing element (4) comprises a peripheral double web (4.1) which forms a groove (4.3) and the second sealing element (5) comprises a peripheral web (5.1), and that, in the operating state, the web (5.1) and the groove (4.3) engage.

2. Dental ultrasonic instrument according to Claim 1, **characterized in that** the ultrasonic tip (3.1) is releasably disposed at a separation point (3.2) on the drive shaft (3.4), wherein the first sealing element (4) is releasably disposed on the ultrasonic tip (3.1) and/or the second sealing element (5) is releasably disposed on the housing (2).

3. Dental ultrasonic instrument according to any one of Claims 1 to 2, **characterized in that** the housing (2) comprises a single or multi-part housing wall (2.2), against which the second sealing element (5) rests or which at least partially forms the second sealing element (5).

4. Dental ultrasonic instrument according to Claim 3, **characterized in that** the housing wall (2.2) is formed by an outer shell (2.2a) and an inner shell (2.2b), wherein the second sealing element (5) rests against the inner shell (2.2b) or the inner shell (2.2b) at least partially forms the second sealing element (5).

5. Dental ultrasonic instrument according to Claim 4, **characterized in that** a light guide (6) having a light exit (6.1) is provided between the outer shell (2.2a) and the inner shell (2.2b), wherein the light exit (6.1) is disposed in the region of the opening (2.3).

## Revendications

1. Instrument ultrasonore de médecine dentaire (1) présentant un boîtier (2) avec un axe médian (2.1) et une cavité (2.4) dotée d'une ouverture (2.3) ménagée sur le côté avant du boîtier (2), ainsi qu'un outil ultrasonore (3) doté d'une pointe à ultrasons (3.1), ledit outil ultrasonore (3) étant disposé au moins partiellement dans la cavité (2.4), **caractérisé en ce qu'**il est prévu un premier élément d'étanchéité (4) conçu avec une section transversale en forme de U, lequel repose par un côté fermé (4.2) contre la pointe à ultrasons (3.1) de manière étanche et va en s'éloignant de l'axe médian (2.1) selon une extension radiale, **en ce qu'**il est prévu un second élément d'étanchéité (5) qui repose contre le boîtier (2) de manière étanche, une distance radiale Sr étant présente entre le premier élément d'étanchéité (4) et le second élément d'étanchéité (5), **en ce que** le premier élément d'étanchéité (4) et le second élément d'étanchéité (5) sont disposés l'un derrière l'autre dans le sens radial par rapport à l'axe médian (2.1) et **en ce que** le premier élément d'étanchéité (4) présente une patte double (4.1) formant une encoche (4.3) et le second élément d'étanchéité (5) présente une patte (5.1) et **en ce que**, en fonctionnement, la patte (5.1) et l'encoche (4.3) s'emboîtent l'une dans l'autre.

2. Instrument ultrasonore de médecine dentaire selon la revendication 1, **caractérisé en ce que** la pointe à ultrasons (3.1) est disposée au niveau d'un point de séparation (3.2) de manière amovible sur l'arbre d'entraînement (3.4), le premier élément d'étanchéité (4) étant disposé de manière amovible sur la pointe à ultrasons (3.1) et/ou le second élément d'étanchéité (5) étant disposé de manière amovible sur le boîtier (2).

3. Instrument ultrasonore de médecine dentaire selon une des revendications 1 et 2, **caractérisé en ce que** le boîtier (2) présente une paroi de boîtier (2.2) formée d'une seule ou de plusieurs pièces contre laquelle repose le second élément d'étanchéité (5) ou qui est formée au moins partiellement par le second élément d'étanchéité (5).

4. Instrument ultrasonore de médecine dentaire selon la revendication 3, **caractérisé en ce que** la paroi de boîtier (2.2) est formée d'une coque externe (2.2a) et d'une coque interne (2.2b), le second élément d'étanchéité (5) reposant contre la coque interne (2.2b), ou bien la coque interne (2.2b) formant au moins partiellement l'élément d'étanchéité (5).

5. Instrument ultrasonore de médecine dentaire selon la revendication 4, **caractérisé en ce qu'**il est prévu, entre la coque externe (2.2a) et la coque interne (2.2b), une fibre optique (6) dotée d'une sortie de lumière (6.1), ladite sortie de lumière (6.1) étant disposée dans la zone de l'ouverture (2.3).
